# EUROPÄISCHE PATENTSCHRIFT

(11) **EP 2 275 194 B1**
(45) Veröffentlichungstag und Bekanntmachung des Hinweises auf die Patenterteilung: **30.03.2016**
(21) Anmeldenummer: 10005376.8
(22) Anmeldetag: 22.05.2010
(51) Int. Cl.: B01D 53/94, B01J 23/89, B01J 29/08, B01J 29/40, B01J 29/70, B01J 37/02, F01N 3/035, B01J 35/00, B01J 21/06, B01J 23/10, B01J 35/04

(54) **Partikelfilter mit Schwefelwasserstoff-Sperrfunktion**
Particulate filter with hydrogen sulphide blocking function
Filtre à particules doté d'une fonction de verrouillage d'hydrogène sulfuré

(30) Priorität: 17.07.2009 DE 102009033635
(43) Veröffentlichungstag der Anmeldung: 19.01.2011
(73) Patentinhaber: Umicore AG & Co. KG, 63457 Hanau-Wolfgang (DE)
(72) Erfinder: Dornhaus, Franz, 63110 Rodgau (DE); Frantz, Stéphanie, 63457 Hanau (DE); Grisstede, Ina, 68199 Mannheim (DE)

(56) Entgegenhaltungen:
- EP-A1- 0 815 925
- DE-A1- 3 735 151
- GB-A- 2 256 375
- JP-A- 2009 247 931
- US-A- 5 254 519
- US-A1- 2009 180 942

## Beschreibung

Die Erfindung betrifft ein katalytisch aktives Partikelfilter, das zusätzlich zu den für Partikelfilter typischen Eigenschaften eine Schwefelwasserstoff-Sperrwirkung aufweist. Die Erfindung betrifft weiterhin ein Verfahren zur Entfernung von Stickoxiden und Partikeln aus dem Abgas von überwiegend mager betriebenen Verbrennungsmotoren (sogenannte "Magermotoren") unter Verwendung des erfindungsgemäßen katalytisch aktiven Partikelfilters.

Das Abgas von Magermotoren enthält neben Kohlenmonoxid CO, Kohlenwasserstoffen HC und Stickoxiden NOₓ einen relativ hohen Sauerstoffgehalt von bis zu 15 Vol.-%. Hinzu kommt zumindest im Falle von Dieselmotoren auch noch eine Partikelemission, die überwiegend aus Rußrückständen und gegebenenfalls organischen Agglomeraten besteht und aus einer partiell unvollständigen Kraftstoffverbrennung im Zylinder herrührt.

Die Einhaltung der Abgasgrenzwerte, die durch die zukünftig gültigen Abgasgesetzgebungen in Europa, Nordamerika und Japan vorgeschrieben sind, erfordert für Dieselfahrzeuge und mit Umstellung des Partikelemissionsgrenzwertes von den bisher üblichen Partikelmasse-bezogenen Bezugsgrößen auf Partikelzahl-bezogene Bezugsgrößen voraussichtlich auch für Fahrzeuge mit überwiegend mager betriebenem Otto-Motor neben einer Stickoxidentfernung aus dem Abgas ("Entstickung") auch dessen Reinigung von Partikeln. Die Schadgase Kohlenmonoxid und Kohlenwasserstoffe können aus dem mageren Abgas durch Oxidation an einem geeigneten Oxidationskatalysator unschädlich gemacht werden. Die Reduktion der Stickoxide zu Stickstoff ist wegen des hohen Sauerstoffgehaltes wesentlich schwieriger. Für die Entfernung der Partikelemissionen ist der Einsatz spezieller Partikelfilter unumgänglich.

Bekannte Verfahren zur Entfernung von Stickoxiden aus Abgasen sind zum einen Verfahren zur selektiven katalytischen Reduktion (Selective Catalytic Reduktion SCR) mittels Ammoniak, und zum anderen Verfahren unter Verwendung von Stickoxid-Speicherkatalysatoren (NOₓ Storage Catalyst NSC).

Die Reinigungswirkung von Stickoxid-Speicherkatalysatoren beruht darauf, daß in einer mageren Betriebsphase des Motors die Stickoxide vom Speichermaterial des Speicherkatalysators vorwiegend in Form von Nitraten gespeichert werden. Ist die Speicherkapazität des NSC erschöpft, so muß der Katalysator in einer darauffolgenden fetten Betriebsphase des Motors regeneriert werden. Dies bedeutet, daß die zuvor gebildeten Nitrate zersetzt und die wieder freiwerdenden Stickoxide mit den reduzierenden Abgasanteilen am Speicherkatalysator zu Stickstoff, Kohlendioxid und Wasser umgesetzt werden. Die Arbeitsweise von Stickoxid-Speicherkatalysatoren wird ausführlich in der SAE-Schrift SAE 950809 beschrieben. Dabei kann es während fetter Betriebsphasen insbesondere bei höheren Betriebstemperaturen über dem Stickoxid-Speicherkatalysator zur Bildung von Schwefelwasserstoff (H₂S) kommen. Der zu H₂S umgesetzte Schwefel stammt ursprünglich aus organischen Schwefelverbindungen im Kraftstoff bzw. aus während des motorischen Verbrennungsprozesses daraus resultierendem SO₂, das gegebenfalls zuvor im Stickoxid-Speicherkatalysator zwischengespeichert war.

Schwefelwasserstoff ist ein in geringsten Konzentrationen unangenehm riechendes und in höheren Konzentration stark giftiges Gas. Deshalb müssen diese Sekundäremissionen in der Abgasanlage des Fahrzeuges vollständig entfernt werden. Zu diesem Zweck sind im Stand der Technik verschiedentlich sogenannte "H₂S-Sperrkatalysatoren" bzw. Abgaskatalysatoren, die zusätzlich mit einer entsprechenden Sperrfunktion ausgerüstet waren, vorgeschlagen worden.

So offenbart beispielsweise US 5,008,090 ein Verfahren zur Verminderung der Bildung von Schwefelwasserstoff bei der Reinigung von Autoabgasen, wenn diese mit einer katalytisch aktiven Zusammensetzung kontaktiert werden, die ein Selten-Erd-Oxid dispergiert auf einem ersten hochschmelzenden anorganischen Oxid und eine zweite aktive Komponente abgeschieden auf einem zweiten anorganischen Trägeroxid ausgewählt aus der Gruppe bestehend aus Zirkonoxid, Titanoxid, Ceroxid, Siliziumoxid, Magnesiumoxid und Zeolith enthält. Die Komposition enthält außerdem Edelmetall. Als zweite aktive Komponente wird ein Metall ausgewählt, das stabile Sulfide unter fetten Abgasbedingungen ausbildet. Als Beispiele für diese Metalle, die unter fetten Abgasbedingungen stabile Sulfide ausbilden, nennt diese Schrift Nickel, Kupfer, Kobalt, Blei und Zink.

Die Verwendung dieser Metalle wie auch die Verwendung von Eisen, Chrom und Mangan als "Sulfidfänger" ist für Katalysatoren mit H₂S-Sperr- oder -Unterdrückungsfunktion typisch. Auch Germanium ist als geeignete Katalysatorbeimischung zur H₂S-Unterdrückung beschrieben worden.

So offenbart JP 2191529 ein Katalysatorsystem zur H₂S-Unterdrückung und zur Entfernung anderer Schadgase aus Abgasen umfassend einen ersten Katalysator enthaltend Kupfer und eine katalytisch aktive Komponente (z. B. Pt, Pd), sowie einen nachgeordneten zweiten Katalysator enthaltend Eisen, Nickel und eine katalytisch aktive Komponente (z. B. Pt, Pd).

DE 19813654 beschreibt ein Verfahren zum Betreiben einer Abgasreinigungsanlage für eine Brennkraftmaschine, die während der überwiegenden Betriebsdauer mit mageren Luft/Kraftstoff-Verhältnissen betrieben wird. Diese Abgasreinigungsanlage enthält einen spezifisch ausgestalteten Stick-oxid-Speicherkatalysator und eine stromaufwärts des Stickoxid-Speicherkatalysators und in einem Abstand zu diesem angeordnete "Schwefelfalle". Bei der "Schwefelfalle" kann es sich um einen konventionellen Abgaskatalysator handeln, der zusätzlich Oxide des Mangans, Nickels, Zinks oder Eisens enthält.

Die US 5254519 offenbart einen Katalysator bestehend aus einem Substrat auf das zunächst eine untere Lage, die ein Metalloxid zur Speicherung von Schwefelwasserstoff enthält, und anschließend eine obere Lage, die Platin und Rhodium enthält, aufgebracht wird. Bei dem Metalloxid zur Speicherung von Schwefelwasserstoff kann es sich um Kupferoxid handeln.

Die im Stand der Technik beschriebenen Abgaskatalysatoren, die zur Unterdrückung von Schwefelwasserstoffemissionen eingesetzt werden, enthalten typischerweise mindestens ein Platingruppenmetall und mindestens ein als "Sulfidfänger" wirkendes Metall wie vorstehend beschrieben. Sie liegen meist in Form von katalytisch aktiven Beschichtungen von monolithischen Durchflußwabenkörpern bzw. als Bestandteil entsprechender Beschichtungen vor. Sie weisen nicht selten eine unzureichende Langzeitstabilität auf. Das gilt insbesondere dann, wenn sie mindestens kurzzeitig höheren Abgastemperaturen ausgesetzt werden. Da, wie eingangs beschrieben, die kommenden Grenzwert-Verschärfungen verlangen, daß sowohl Stickoxide als auch Partikel aus dem Abgas von überwiegend mager betriebenen Verbrennungsmotoren entfernt werden müssen, werden sich entsprechende Temperaturspitzen nicht mehr vermeiden lassen, da mindestens bei der aktiven Regeneration des Partikelfilters, d.h. bei thermisch induziertem Abbrand von auf dem Partikelfilter abgeschiedenen Rußagglomeraten, typischerweise Abgastemperaturen von mehr als 400°C auftreten.

Hinzu kommt, daß am Eintritt eines in geringem Abstand abströmseitig zu einem Stickoxid-Speicherkatalysator angeordneten Partikelfilters während der Entschwefelung des Stickoxid-Speicherkatalysators nicht selten Abgastemperaturen von 650 bis 750°C auftreten. Abgaskatalysatoren nach dem Stand der Technik, die zur Unterdrückung von Schwefelwasserstoffemissionen eingesetzt werden, sind diesen Anforderungen in der Regel nicht gewachsen.

Der vorliegenden Erfindung lag daher die Aufgabe zugrunde, eine Schwefelwasserstoff-Sperrfunktion für ein Abgasreinigungssystem für überwiegend mager betriebene Verbrennungsmotoren enthaltend einen Stickoxid-Speicherkatalysator und ein Partikelfilter zur Verfügung zu stellen, die so ausgebildet ist, daß sich das resultierende Abgassystem bezüglich aller wesentlicher Abgasreinigungsfunktionen durch eine hohe thermische Alterungsstabilität auszeichnet. Desweiteren lag der Erfindung die Aufgabe zugrunde, ein Abgasreinigungssystem enthaltend einen Stickoxid-Speicherkatalysator, einen Partikelfilter und eine Schwefelwasserstoff-Sperrfunktion bereit zu stellen, das sich durch günstige Herstellkosten und minimierten Bauraumbedarf auszeichnet.

Die Aufgabe wird gelöst durch ein katalytisch aktives Partikelfilter gemäß Anspruch 1.

Die Aufgabe wird weiterhin gelöst durch die Verwendung des erfindungsgemäßen Partikelfilters zur Entfernung von Partikeln und Schwefelwasserstoff aus dem Abgas von überwiegend mager betriebenen Verbrennungsmotoren, sowie durch ein Verfahren zur Entfernung von Stickoxiden und Partikeln aus dem Abgas von überwiegend mager betriebenen Verbrennungsmotoren, wobei das zu reinigende Abgas zunächst über einen anströmseitig angeordneten Stickoxid-Speicherkatalysator und anschließend über ein erfindungsgemäßes katalytisch aktives Partikelfilter geleitet wird, welches abströmseitig zum Stickoxid-Speicherkatalysator angeordnet ist.

Die Erfinder haben überraschenderweise festgestellt, daß eine räumliche Trennung des "Sulfidfängers" vom katalytisch aktiven Edelmetall zu einer signifikanten Verbesserung der Langzeitstabilität des resultierenden Sperrkatalysators auch bei höherer thermischer Belastung führt. Wir glauben, daß dies darauf zurückzuführen ist, daß durch räumliche Trennung des als "Sulfidfänger" eigesetzten Kupfers, das sich dadurch auszeichnet, daß es Sulfid bei Anwesenheit selbst geringster Mengen Sauerstoff sehr schnell katalytisch zu Schwefeloxiden oxidiert, und des katalytisch aktiven Platingruppenmetalls eine Legierungsbildung zwischen diesen beiden Komponenten verhindert wird. Solche Legierungsbildungen führen zu signifikanten Verlusten der katalytischen Aktivität der Platingruppenmetalle. Die Legierungsbildung setzt umso schneller ein und verläuft umso vollständiger, je höher die Abgastemperaturen sind, denen das Bauteil ausgesetzt ist. Mit der räumlichen Trennung der Kupferverbindung von der oxidationsaktiven, katalytischen Beschichtung wird somit gewährleistet, daß die Schwefelwasserstoff-Sperrfunktion auch bei periodisch stattfindenden, aktiven Filterregenerationen, bei denen Abgastemperaturen von bis zu 650°C am Eintritt des Filters auftreten können, dauerhaft stabil bleibt. Durch die kombinierte Anordnung von oxidationskatalytisch aktiver Beschichtung und der durch die die Kupferverbindung enthaltende Beschichtung bereit gestellte Schwefelwasserstoff-Sperrfunktion auf dem Filter kann darüber hinaus der Einbau eines zusätzlichen Aggregates in die Abgasanlage vermieden werden. Dies ist insbesondere deshalb von Vorteil, weil jedes Abgasreinigungsaggregat wesentlich zu einer Erhöhung des Abgasgegendruckes in der Abgasanlage beiträgt und somit eine Ursache für Produktivverluste der Motorleistung darstellt. Zudem wird dadurch eine Minimierung der Gesamtkosten und des Bauraumbedarfs der Abgasanlage erreicht.

Bei katalytisch aktiven Partikelfiltern ist es von besonderer Bedeutung, daß die Beschichtung, durch die die katalytische Funktion des Bauteils erzielt wird, so ausgestaltet ist, daß der Staudruck des beschichteten Filters einen kritischen Staudruck, der etwa 20 % über dem Staudruck des unbeschichteten Filterkörpers liegt, nicht übersteigt. Um dies sicherzustellen, kommt den möglichen Anordnungen der beiden Beschichtungen im erfindungsgemäßen Partikelfilter eine besondere Bedeutung zu.

Die oxidationskatalytisch aktive Beschichtung bildet auf dem Filterkörper eine Zone aus, die 10 bis 90 %, besonders bevorzugt 30 bis 70 % und ganz besonders bevorzugt 30 bis 50 % der gesamten Länge des Filterkörper bedeckt. Die die Kupferverbindung enthaltende Beschichtung bildet eine zweite Zone aus, die sich daran anschließt und den Rest der Länge des Filterkörpers bedeckt. Durch eine solche zonierte Ausführung der beiden Beschichtungen auf dem Filterkörper wird die Kontaktfläche der beiden Beschichtungen zueinander und somit auch die Wahrscheinlichkeit einer thermisch induzierten Wanderung von mobilen Kupferatomen in die Platingruppenmetall-haltige Zone bestmöglich minimiert. Vergiftungserscheinungen, die auf eine Legierungsbildung des Platingruppenmetalls mit "verschlepptem" Kupfer zurückzuführen sind und die katalytische Aktivität der oxidationskatalytisch aktiven Beschichtung deutlich verringern, werden somit selbst bei Belastungen des Bauteils bei hohen Abgastemperaturen über eine lange Betriebsdauer weitestgehend verhindert.

Im erfindungsgemäßen Partikelfilter mit einer wie vorstehend beschriebenen zonierten Anordnung der Beschichtungen werden poröse Wandflußfiltersubstrate aus Cordierit, Siliziumcarbid oder Aluminiumtitanat eingesetzt. Diese Wandflußfiltersubstrate weisen An- und Abströmkanäle auf, wobei jeweils die abströmseitigen Enden der Anströmkanäle und die anströmseitigen Enden der Abströmkanäle mit gasdichten "Stopfen" verschlossen sind. Dadurch wird das zu reinigende Abgas, das das Filtersubstrat durchströmt, zum Durchtritt durch die poröse Wand zwischen An- und Abströmkanal gezwungen, was eine exzellente Partikelfilterwirkung bedingt. Die Beschichtungen liegen in den zonierten Ausführungsformen mit Wandflußfiltersubstrat überwiegend in den porösen Wänden zwischen An- und Abströmkanälen vor.

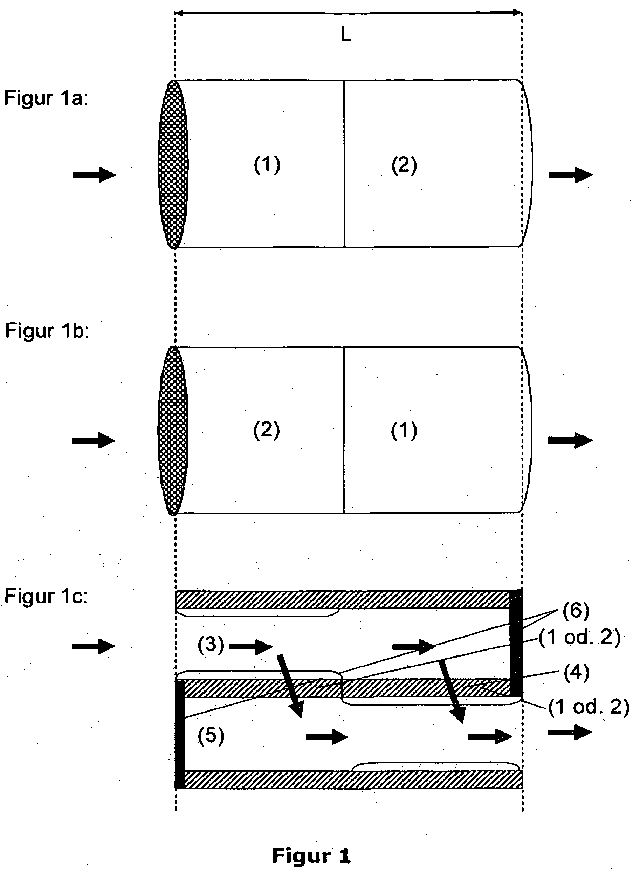

Figur 1 zeigt schematisch bevorzugte Ausführungsformen eines mit einer zonierten Beschichtung versehenen, erfindungsgemäßen Filters, in diesem Falle eines zoniert beschichteten Wandflußfilters. In der in Figur 1a dargestellten Ausführungsform ist die oxidationskatalytisch aktive Beschichtung (1) als anströmseitige Zone und die die Kupferverbindung enthaltende Beschichtung (2) als abströmseitige Zone ausgebildet. Figur 1b zeigt eine Ausführungsform mit der umgekehrten Anordnung der Zonen. Figur 1c ist ein Detailausschnitt aus beiden vorstehend gezeigten Ausführungsformen. Dargestellt ist ein Anströmkanal (3) und ein Abströmkanal (5), wobei beide durch eine poröse Wand (4) voneinander getrennt und wechselseitig durch einen gasdichten Abschluß (6) verschlossen sind. Beide Beschichtungen (1) und (2) sind - unabhängig von der in Strömungsrichtung gewählten Reihenfolge in die Wand eingebracht. Da die Aufbringung der anströmseitigen Zone bevorzugt durch Einpumpen einer geeigneten Beschichtungssuspension in die Anströmkanäle und entsprechend die Aufbringung der abströmseitigen Zone bevorzugt durch Einpumpen einer geeigneten Beschichtungssuspension in die Abströmkanäle erfolgt, kann es insbesondere bei größeren Beschichtungsmengen in den Zonen zu aufwandigen Beschichtungsüberständen in den Kanälen kommen.

Zonierte, erfindungsgemäße Filter wie in Figur 1a, in denen die oxidationskatalytisch aktive Zone anströmseitig ausgebildet ist, zeigen neben einer sehr guten Schwefelwasserstoff-Sperrwirkung, die durch die abströmseitige, die Kupferverbindung enthaltende Zone bereitgestellt wird, vor allem hervorragende Oxidationsaktivität gegenüber den im Abgas auch enthaltenden Primärschadgasen Kohlenmonoxid CO und Kohlenwasserstoffen HC. Sie kommen bevorzugt in Abgasanlagen zum Einsatz, in denen diese Emissionen durch vorgeschaltete Abgasreinigungsaggregate wie Oxidationskatalysatoren und/oder Stickoxid-Speicherkatalysatoren mit zusätzlicher Oxidationswirkung nicht hinreichend vermindert werden können. Ihre hervorragende Oxidationsaktivität gegenüber CO und HC ist vermutlich vor allem darauf zurückzuführen, daß die oxidationsaktive katalytische Beschichtung, deren Funktion bevorzugt durch Platin und/oder Palladium als katalytisch aktiver Komponente bereitgestellt wird, konzentiert am Filtereintritt und somit an der heißesten Stelle des Filters vorliegt. Somit sind die für die CO- und HC-Oxidation erforderlichen Mindesttemperaturen (Light-Off-Temperaturen) in den üblichen Betriebszuständen gegeben.

Zonierte Ausführungsformen des erfindungsgemäßen Filters, in denen die die Kupferverbindung enthaltende Beschichtung als anströmseitige Zone vorliegt (vgl Figur 1b), zeigen gegenüber den vorstehend genannten Ausbildungen eine verbesserte Schwefelwasserstoff-Sperrwirkung. Sie eignen sich insbesondere zum Einsatz in Abgasanlagen von Fahrzeugen, für die der Betrieb mit schwefelarmem Kraftstoff nicht gewährleistet werden kann und in denen demzufolge mit häufigen, aktiven Entschwefelungen eines vorgeschalteten Stickoxid-Speicherkatalysators zu rechnen ist. Darüber hinaus zeigt die abströmseitige Anordnung der oxidationskatalytisch aktiven Beschichtung deutliche Vorteile, wenn bei aktiven Regenerationen des Partikelfilters zum Zwecke des thermisch induzierten Rußabbrands durch unvollständige Umsetzung des Russes Kohlenwassersoffe aus den dem Ruß anhaftenden Kohlenwasserstoffanteilen ("volatile organic fraction VOF") oder Kohlenmonoxid als Sekundäremissionen entstehen. Solche Sekundäremissionen werden an einer abströmseitig angeordneten, Platingruppen-metall-haltigen Zone, sehr effektiv zu Kohlendioxid CO₂ umgesetzt.

Andere Anordnungen der Beschichtung stellen nicht erfindungsgemäße Lösungen der eingangs diskutierten Probleme dar. Dies gilt insbesondere für Ausführungsformen, in denen der Filterkörper ein poröses Wandflußfiltersubstrat aus Cordierit, Siliziumcarbid oder Aluminiumtitanat ist und in denen eine der beiden Funktionsbeschichtungen in der porösen Wand zwischen An- und Abströmkanälen vorliegt und sich über die gesamte Länge des Bauteils erstreckt. Die jeweils andere Funktionsbeschichtung wird dann als Aufwand-Beschichtung entweder in den Abströmkanälen oder in den Abströmkanälen appliziert. Sie kann die die erste Fuktionsbeschichtung enthaltende poröse Wand über die gesamte Länge des Bauteils bedecken oder eine Zone ausbilden, welche die die erste Funktionsbeschichtung enthaltende poröse Wand nur teilweise bedeckt. Je nach Wahl der resultierenden Beschichtungsform kommen die verschiedenen Wirkungen des erfindungsgemäßen Partikelfilters unterschiedlich stark zur Ausprägung.

So werden Vorteile für die Schwefelwasserstoff-Sperrwirkung erzielt, wenn die die Kupferverbindung enthaltende Beschichtung in die porösen Wände zwischen Anström- und Abströmkanälen eingebracht ist oder / und das in den Filterkörper einströmende Abgas zuerst mit der die Kupferverbindung enthaltenden Beschichtung in Kontakt kommt. Dies liegt darin begründet, daß das H₂S-haltige Abgas durch die im Bauteil herrschende Zwangsströmung über die gesamte Länge des Bauteils durch die poröse Wand gezwungen wird.

Vice versa werden Vorteile bei der Umsetzung von während der aktiven Partikelfilterregeneration erzeugten Sekundäremissionen zu unschädlichem Kohlendioxid, sowie beim Partikelabbrand als solchem erzielt, wenn die oxidationskatalytisch aktive Beschichtung in die porösen Wände des Wandflußfiltersubstrates zwischen Anström- und Abströmkanälen eingebracht ist oder / und das in den Filter einströmende Abgas zuerst mit der oxidationskatalytisch aktiven Beschichtung in Kontakt kommt.

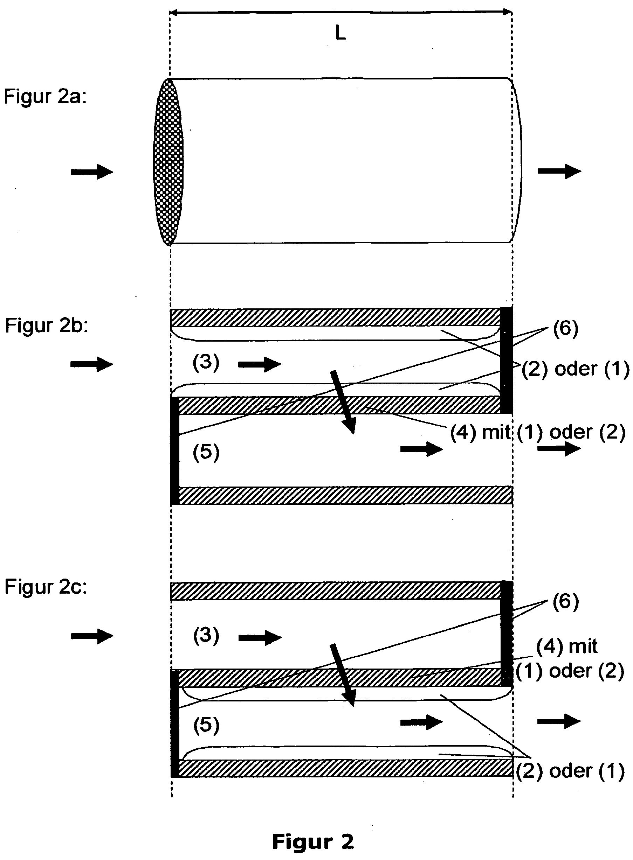

Figur 2 zeigt schematisch einige der letztgenannten nichterfindungsgemäßen Ausführungsformen, in denen die genannten Funktionsschichten des erfindungsgemäßen Partikelfilters übereinander angeordnet sind ("gelayerte" Ausführungsformen). Welche Ausbildung des erfindungsgemäßen katalytisch aktiven Partikelfilters bevorzugt zu wählen ist, um eine bestimmte Wirkung dieses multifunktionellen Bauteils zu verstärken, ist Gegenstand üblicher, dem Fachmann geläufiger Optimierungsversuche und bedarf daher keiner eingehenderen Erläuterung. Ganz grundsätzlich ist jedoch festzustellen, daß die zuvor beschriebenen und in Figur 1 gezeigten erfindungsgemäßen zonierten Ausführungsformen den "gelayerten" Ausführungsformen, wie sie beispielhaft Figur 2 zeigt, grundsätzlich vorzuziehen sind. Grund hierfür ist die in den gezonten Ausführungsformen minimierte Kontaktfläche zwischen der die Kupferverbindung enthaltenden Beschichtung und der oxidationskatalytisch aktiven Beschichtung. Wie bereits diskutiert wird dadurch die Möglichkeit einer thermisch induzierten Wanderung von mobilen Kupferatomen in die Platingruppen-metall-haltige Beschichtung bestmöglich reduziert und Vergiftungserscheinungen des Edelmetalls vorgebeugt.

Unabhängig von der räumlichen Anordung der Beschichtungen liegt die Kupferverbindung im erfindungsgemäßen Partikelfilter als Kupferoxid oder in Form eines mit einer zu Kupferoxid zersetzlichen Vorläuferverbindung imprägnierten, hochoberflächigen, hochschmelzenden Trägeroxids vor. Auch Mischungen dieser beiden Komponenten oder Mischungen von Kupferoxid mit dem unbehandelten, hochoberflächigen, hochschmelzenden Trägeroxid sind geeignet. Besonders bevorzugt sind Kupferoxid und Mischungen von Kupferoxid mit dem unbehandelten, hochoberflächigen, hochschmelzenden Trägeroxid. Dabei wird das Trägeroxid bevorzugt ausgewählt aus der Gruppe bestehend aus Aluminiumoxid, Selten-Erd-dotiertes Aluminiumoxid, Ceroxid, Cer-Zirkon-Mischoxid, Selten-Erd-dotiertes Cer-Zirkon-Mischoxid oder Mischungen davon. Besonders bevorzugt sind Selten-Erd-dotierte Aluminiumoxide, Cer-Zirkon-Mischoxide und Selten-Erd-dotierte Cer-Zirkon-Mischoxide.

Die oxidationskatalytisch aktive Beschichtung enthält - unabhängig von ihrer räumlichen Anordnung im erfindungsgemäßen Partikelfilter - bevorzugt Platin und / oder Palladium, sowie aktives Aluminiumoxid. Dabei liegen die Platingruppenmetalle bevorzugt in einem Verhältnis Platin : Palladium von 15 : 1 bis 1 : 5, besonders bevorzugt von 12 : 1 bis 1 : 2 und ganz besonders bevorzugt von 6 : 1 bis 1 : 1 vor.

Desweiteren enthält die oxidationsaktive katalytische Beschichtung bevorzugt eine oder mehrere Zeolithverbindungen, die ausgewählt sind aus der Gruppe bestehend aus Zeolith β (Zeolith beta), Zeolith Y, ZSM-5 und Mischungen davon. Solche Zeolithbeimischungen zeichnen sich durch die Fähigkeit aus, insbesondere in Kaltstartphasen, wenn die Abgastemperaturen noch unter den Light-Off-Temperaturen der Edelmetall-katalysierten HC-Oxidationsreaktion liegen, Kohlenwasserstoffe vorübergehend einspeichern zu können. Durch diese Beimischungen können demzufolge Durchbrüche von HC-Emissionen und deren Freisetzung in die Umwelt vermieden werden.

Weiterhin führen Beimischungen von Sauerstoffspeichermaterialien in der oxidationsaktiven katalytischen Beschichtungen zu Verbesserungen des HC- und CO-Umsatzes, wenn der anströmseitig angeordnete Stickoxid-Speicherkatalysator zu NOₓ-Regeneration fettem Abgas ausgesetzt wird. Bevorzugt enthält daher auch die oxidationskatalytisch aktive Beschichtung ein oder mehrere Cer-Zirkon-Mischoxide und/oder Selten-Erd-dotierten Cer-Zirkon-Mischoxide.

Das erfindungsgemäße Partikelfilter eignet sich insbesondere zur Entfernung von Partikeln und Schwefelwasserstoff aus dem Abgas von überwiegend mager betriebenen Verbrennungsmotoren.

Durch Überleitung des zu reinigenden Abgases über einen anströmseitig angeordneten Stickoxid-Speicherkatalysator und anschließend über ein erfindungsgemäßes katalytisch aktives Partikelfilter, welches abströmseitig zum Stickoxid-Speicherkatalysator angeordnet ist, können in vorteilhafter Weise Stickoxide und Partikel aus dem Abgas von mit überwiegend mager betriebenen Verbrennungsmotoren entfernt werden. Weitere Abgasreinigungsaggregate, insbesondere zur Entfernung von SchwefelwasserstoffEmissionen, sind in einer solchen, erfindungsgemäßen Abgasreinigungsanlage nicht notwendig, was Kosten sparend wirkt und bedingt, daß eine solche Abgasreinigungsanlage auch in Fahrzeugen, in denen nur wenig Bauraum zur Verfügung steht, leicht untergebracht werden kann.

Bevorzugt wird der vorgeschaltete Stickoxid-Speicherkatalysator in motornaher Position angeordnet, da hier üblicherweise die höchsten Abgastemperaturen herrschen. Das erfindungsgemäße Partikelfilter eignet sich für den Einsatz im Unterboden, wird jedoch bevorzugt zusammen mit dem Stickoxid-Speicherkatalysator ebenfalls in einem motornahen Gehäuse untergebracht. Dies setzt eine besonders hohe thermische Alterungsstabilität der Abgasreinigungsaggregate voraus, wie sie das erfindungsgemäße Partikelfilter aufweist. Der Vorteil der Anordnung beider Aggregate im motornahen Bereich besteht darin, daß dadurch sowohl die aktive Entschwefelung des Stickoxid-Speicherkatalysators als auch die aktive Partikelfilterregeneration in der Regel ohne aufwändige, vom Motor unabhängige Heizmaßnahmen möglich werden.

Die Erfindung wird im Folgenden anhand von Figuren und Beispielen weitergehend erläutert.
- **Figur 1:**: Figur 1 zeigt schematisch Ausführungsformen des erfindungsgemäßen Partikelfilters mit zonierter Anordnung der oxidationskatalytisch aktiven Beschichtung (1) und der die Kupferverbindung enthaltenden Beschichtung (2). Figur 1c zeigt, daß die Beschichtungen (1) und (2) in einem Wandflußfiltersubstrat mit Anströmkanälen (3) und Abströmkanälen (5), die wechselseitig einen gasdichten Abschluß (6) aufweisen, in entsprecheder Abfolge in die poröse Wand (4) zwischen An- und Abströmkanal eingebracht wird, wobei jeweils ein aufwandiger Überstand der Beschichtung möglich ist.
- **Figur** 2:: Figur 2 zeigt schematisch Ausführungsformen eines nicht erfindungsgemäßen Partikelfilters, worin entweder die oxidationskatalytisch aktive Beschichtung (1) oder die die Kupferverbindung enthaltende Beschichtung (2) in die porösen Wände (4) eines Wandflußfiltersubstrates zwischen Anströmkanal (3) und Abströmkanal (5) eingebracht ist. Die jeweils andere Beschichtung wird entweder wie in Figur 2b aufwandig in den Anströmkanal oder wie in Figur 2c aufwandig in den Abströmkanal eingebracht.

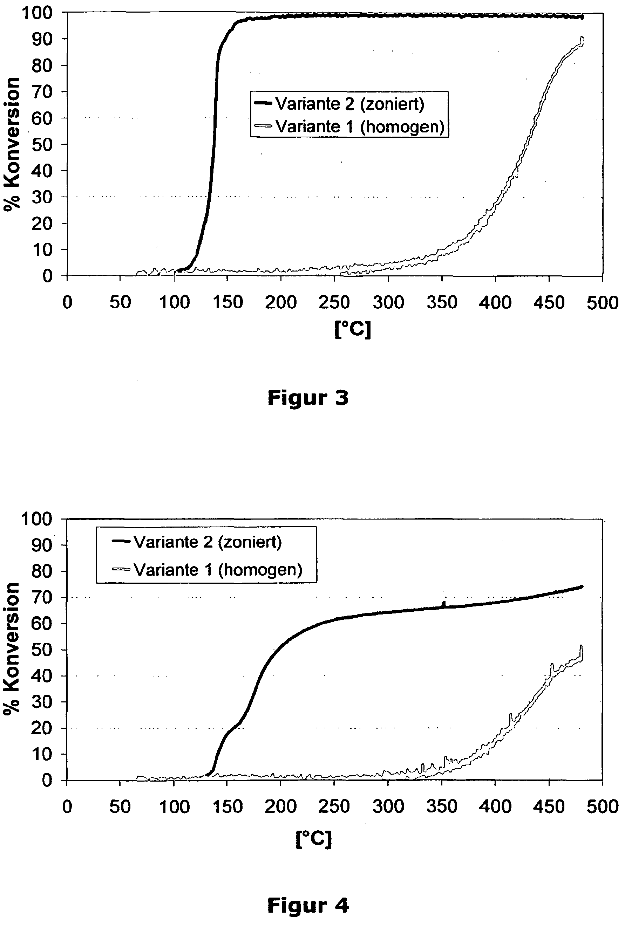

- **Figur 3:**: Ergebnis der Untersuchung der Anspringtemperatur eines Partikelfilters mit homogener, eine Kupferverbindung und Edelmetall-haltiger Beschichtung ("Variante 1 (homogen)") und eines erfindungsgemäßen Partikelfilters ("Variante 2 (zoniert)"), in welchem die oxidationsaktive katalytische Beschichtung als anströmseitige Zone und die die Kupferverbindung enthaltende Beschichtung als abströmseitige Zone vorliegt, in der CO-Oxidation.
- **Figur 4:**: Ergebnis der Untersuchung der Anspringtemperatur eines Partikelfilters mit homogener, eine Kupferverbindung und Edelmetall-haltiger Beschichtung ("Variante 1 (homogen)") und eines erfindungsgemäßen Partikelfilters ("Variante 2 (zoniert)"), in welchem die oxidationsaktive katalytische Beschichtung als anströmseitige Zone und die die Kupferverbindung enthaltende Beschichtung als abströmseitige Zone vorliegt, in der Kohlenwasserstoff-Oxidation.

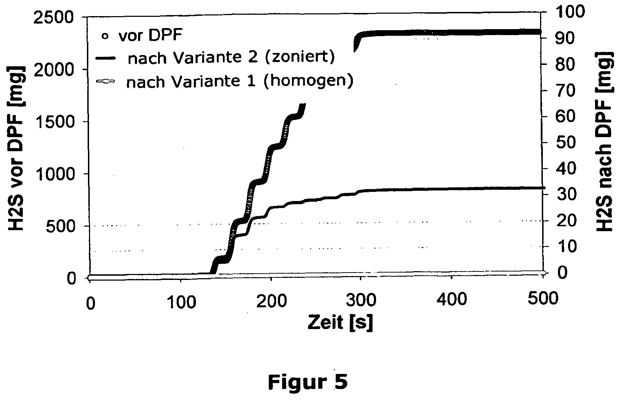

- **Figur 5:**: Ergebnis der Untersuchung zur Fähigkeit, unter den Bedingungen, die bei der Entschwefelung eines vorgeschalteten Stickoxid-Speicherkätalysators auftreten können, H₂S katalytisch zu SO₂ zu oxidieren, an einem Partikelfilter mit homogener, eine Kupferverbindung und Edelmetall-haltiger Beschichtung ("Variante 1 (homogen)") und an einem erfindungsgemäßen Partikelfilter ("Variante 2 (zoniert)"), in welchem die oxidationsaktive katalytische Beschichtung als anströmseitige Zone und die die Kupferverbindung enthaltende Beschichtung als abströmseitige Zone vorliegt.

### Vergleichsbeispiel:

Partikelfilter mit einer homogenen Beschichtung, die eine Edelmetallkomponente zur HC/CO Oxidation sowie Kupferoxid zur H₂S-Oxidation enthält - Herstellung:
Zur Herstellung einer geeigneten Beschichtungssuspension wurde zunächst ein stabilisiertes γ-Aluminiumoxid mittels "incipient-wetness"-Methode mit Platin und Palladium im Verhältnis 2:1 belegt. Die Edelmetalle wurden durch eine nachfolgende thermische Behandlung auf dem Aluminiumoxid fixiert. Das so erhaltene edelmetallhaltige Pulver wurde zusammen mit Kupferoxid (CuO) in Wasser suspendiert und vermahlen, bis im Wesentlichen alle Partikel eine Korngröße <10 µm aufwiesen. Der d₉₀-Wert der Partikel in der Beschichtungssupension betrug dabei <5 µm.

Mit der so erhaltenen Beschichtungssuspension wurde ein handelsübliches Wandflußfiltersubstrates aus Siliziumcarbid (SiC) beschichtet. Dazu wurde das Filtersubstrat so ausgerichtet, daß die Strömungskanäle senkrecht waren. Die Suspension wurde dann durch die untere Stirnfläche in das Substrat eingepumpt. Nach kurzer Zeit wurde überschüssige Suspension nach unten abgesaugt. Durch diese Methode wurde die Beschichtung im Wesentlichen in die Poren der Substratwände eingebracht.

Anschließend wurde das Filter getrocknet und für 2 Stunden bei 500°C kalziniert. Das fertig beschichtete Filter ("Variante 1 (homogen)") wies eine Edelmetallbeladung von 1,236 g/L und eine Kupferoxid-Beladung von 15 g/L, beides bezogen auf das Gesamtvolumen des Partikelfilters, auf.

### Beispiel:

Erfindungsgemäßes Partikelfilter mit einer oxidationsaktiven, katalytischen Beschichtung enthaltend Platingruppenmetall, die als anströmseitige Zone ausgeführt ist, und einer Kupferoxid-haltigen Beschichtung, welche als abströmseitige Zone ausgeführt ist - Herstellung:

Zur Herstellung einer Beschichtungssuspension für die anströmseitige Zone (oxidationsaktive katalytische Beschichtung) wurde zunächst ein Platin/Palladium-haltiges γ-Aluminiumoxid hergestellt, wie dies im Vergleichsbeispiel beschrieben ist. Das Pulver wurde in Wasser suspendiert und entsprechend der Beschreibung aus dem Vergleichsbeispiel vermahlen.

Mit dem ebenfalls vorstehend beschriebenen Beschichtungsprozess wurde ein dem Vergleichsbeispiel entsprechendes Wandflußfiltersubstrat aus SiC von der Anströmseite bis zu seiner halben Länge mit der derart erhaltenen Suspension beschichtet. Nach diesem Beschichtungsschritt enthielt das Filter die gleiche Menge Edelmetall wie das im Vergleichsbeispiel beschriebene Filter ("Variante 1 (homogen)"), also 1,236 g/L Edelmetall, bezogen auf das Gesamtvolumen des Partikelfilters.

Zur Herstellung einer Beschichtungssuspension für die abströmseitige Zone (die die Kupferverbindung enthaltende Beschichtung) wurden Kupferoxid (CuO) und stabilisiertem γ-Aluminiumoxid im Verhältnis 1:1 in Wasser suspendiert und wie vorstehend beschrieben vermahlen. Mit der erhaltenen Suspension wurde das Filter nach dem oben beschriebenen Prozess beschichtet, wobei die Suspension durch die abströmseitige Stirnfläche in das Substrat eingepumt wurde. Dies erfolgte nur insoweit, daß die Kupferoxidhaltige Beschichtung im Wesentlichen in die Poren der Substratwände in der zuvor noch nicht beschichteten Hälfte des Filtersubstrates eingebracht wurde.

Anschließend wurde das Filter getrocknet und für 2 Stunden bei 500°C kalziniert. Das fertig beschichtete Filter ("Variante 2 (zoniert)") wies eine Edelmetallbeladung von 1,236 g/L und eine Kupferoxid-Beladung von 8 g/L auf, beides bezogen auf das Gesamtvolumen des Partikelflters.

Sowohl das im Vergleichsbeispiel hergestellte Filter ("Variante 1 (homogen)") mit homogener Beschichtung als auch das erfindungsgemäße Filter ("Variante 2 (zoniert)") wurden auf ihre katalytische Aktivität hin untersucht. Vor der Untersuchung wurden die Filter einer synthetischen Alterung unter hydrothermalen Bedingungen unterzogen. Dazu wurden sie in einem Ofen für 16 Stunden in einer Atmosphäre enthaltend 10 Vol.-% Wasserdampf und 10 Vol.-% Sauerstoff in Stickstoff einer Temperatur von 750°C ausgesetzt.

Die Anspringtemperaturen der beschriebenen Teile für die Oxidation von CO und Kohlenwasserstoffen wurde an einer Labor-Modellgasanlage herkömmlicher Bauart mit einem Modellabgas mit der folgenden Zusammensetzung ermittelt:

| **Abgaskomponente** | **Konzentration** |
|---|---|
| CO | 350 Vol.-ppm |
| H₂ | 116 Vol.-ppm |
| C₃H₆/ C₃H₈ (rel. Zu C1) | 270 Vol.-ppm |
| SO₂ | 20 Vol.-ppm |
| NO | 270 Vol.-ppm |
| CO₂ | 10,7 Vol.-% |
| H₂O | 10 Vol.-% |
| O₂ | 6 Vol.-% |
| N₂ | Rest |

Dabei wurde eine Raumgeschwindigkeit von 25.000 h⁻¹ eingestellt. Das Modellabgas wurde zur Bestimmung der Anspringtemperaturen mit einer Rate von 15°/min aufgeheizt.

Die Figuren 3 und 4 zeigen die Anspringtemperaturen der getesteten Filter für Kohlenmonoxid (Figur 3) und für Kohlenwasserstoffe (Figur 4). Es ist deutlich zu erkennen, dass das homogen beschichtete Filter (Vergleichsbeispiel, "Variante 1 (homogen)") trotz des gleichen Edelmetallgehaltes eine wesentlich höhere Anspringtemperatur in der CO-Oxidation und in der HC-Oxidation aufweist, als das erfindungsgemäße Filter "Variante 2 (zoniert)". Die CO/HC-Oxidationsaktivität von "Variante 1 (homogen)" ist somit nicht ausreichend, um zu einer effizienten Reinigung des Abgases von diesen Komponenten beizutragen. Das erfindungsgemäße Filter ("Variante 2 (zoniert)") zeigt ein erheblich besseres Anspringverhalten sowohl in der CO-Oxidation als auch in der HC-Oxidation und kann somit einen signifikanten Beitrag zur Reinigung des Abgases von Kohlenmonoxid und Kohlenwasserstoffen leisten.

Die Fähigkeit, unter den Bedingungen, die bei der Entschwefelung eines vorgeschalteten Stickoxid-Speicherkatalysators auftreten können, H₂S katalytisch zu SO₂ zu oxidieren, wurde in einem weiteren Modellgasversuch getestet. Dazu wurde jeweils ein System aus einem handelsüblicher Stickoxid-Speicherkatalysator und einem direkt dahinter angeordneten Partikelfilter verschwefelt ("Variante 1 (homogen)" bzw. "Variante 2 (zoniert)"; in beiden Systemen waren die Volumina von Stickoxid-Speicherkatalysator und Partikelfilter identisch). Die gewählte Schwefelmenge betrug ca. 1 g/L Katalysatorvolumen, bezogen auf den Stickoxid-Speicherkatalysator, eingebracht mittels Zusatz von 300 Vol.-ppm SO₂ zum Abgasstrom. Anschließend wurde jeweils eine Desulfatisierung bei einer Temperatur am Eingang des Partikelfilters von 650°C simuliert. Dazu wurde die Luftzahl λ in zehn Intervallen von jeweils 10 Sekunden durch Erhöhen der CO- und HC-Konzentration (CO: 3,5 Vol. %; HC: 3000 Vol.-ppm) bzw. durch Verringern der Sauerstoffkonzentration des Abgasstromes auf einen Wert von etwa 0,9 erniedrigt (Abstand dieser Fettphasen: ebenfalls 10 s).

Die Ergebnisse sind in Figur 5 dargestellt. Das Vergleichsfilter "Variante 1 (homogen)" setzte das angebotene H₂S vollständig um, so daß nach dem Filter kein Schwefelwasserstoff durchbrach. Das erfindungsgemäße Filter ("Variante 2 (zoniert)") erzielte unter den gewählten Bedingungen eine Konversion von etwa 98% des angebotenen Schwefelwasserstoffes.

Zusammenfassend zeigen die Ergebnisse, daß mit dem erfindungsgemäßen Partikelfilter auch nach hydrothermaler Alterung eine vollkommen zufriedenstellende H₂S-Sperrwirkung bei zugleich hervorragender HC- und CO-Konvertierungsaktivität erzielt wird. Somit wird es möglich, ein Abgasreinigungssystem bereitzustellen, das bei günstigen Herstellkosten und minimiertem Bauraumbedarf effektiv Stickoxide, CO, HC und Partikel aus dem Abgas überwiegend mager betriebener Verbrennungsmotoren entfernen kann, ohne daß es dabei während kritischer Betriebsphasen (z.B. während der Entschwefelung des Stickoxid-Speicherkatalysators, oder der Dieselpartikelfilterregeneration) zu Durchbrüchen der unerwünschten, weil unangenehm riechenden und darüber hinaus giftigen Sekundäremission Schwefelwasserstoff H₂S kommt.

## Patentansprüche

1. Katalytisch aktives Partikelfilter enthaltend einen Filterkörper, eine Kupferverbindung und eine oxidationsaktive, katalytische Beschichtung, die mindestens ein katalytisch aktives Platingruppenmetall enthält, wobei die Kupferverbindung in einer zweiten auf den Filterkörper aufgebrachten Beschichtung vorliegt, wobei die oxidationskatalytisch aktive Beschichtung eine Zone ausbildet, die 10 bis 90 % der gesamten Länge des Filterkörpers bedeckt, während die die Kupferverbindung enthaltende Beschichtung eine zweite Zone ausbildet, die sich daran anschließt und den Rest der Länge des Filterkörpers bedeckt und wobei der Filterkörper ein poröses Wandflußfiltersubstrat aus Cordierit, Siliziumcarbid oder Aluminiumtitanat ist und beide Beschichtungen überwiegend in den porösen Wänden zwischen Anström- und Abströmkanälen vorliegen,
**dadurch gekennzeichnet,**
**dass** als Kupferverbindung Kupferoxid oder ein mit einer zu Kupferoxid zersetzlichen Vorläuferverbindung imprägniertes, hochoberflächiges, hochschmelzendes Trägeroxid oder Mischungen davon oder Mischungen von Kupferoxid mit unbehandeltem, hochoberflächigem, hochschmelzendem Trägeroxid eingesetzt werden.

2. Katalytisch aktives Partikelfilter nach Anspruch 1,
**dadurch gekennzeichnet,**
**dass** das Trägeroxid ausgewählt ist aus der Gruppe bestehend aus Aluminiumoxid, Selten-Erd-dotiertes Aluminiumoxid, Ceroxid, Cer-Zirkon-Mischoxid, Selten-Erd-dotiertes Cer-Zirkon-Mischoxid oder Mischungen davon.

3. Katalytisch aktives Partikelfilter nach Anspruch 1 oder 2,
**dadurch gekennzeichnet,**
**dass** die oxidationskatalytisch aktive Beschichtung Platin oder Palladium oder Platin und Palladium, sowie aktives Aluminiumoxid enthält.

4. Katalytisch aktives Partikelfilter nach Anspruch 3,
**dadurch gekennzeichnet,**
**dass** die oxidationskatalytisch aktive Beschichtung weiterhin eine oder mehrere Zeolithverbindungen ausgewählt aus der Gruppe bestehend aus Zeolith β (Zeolith beta), Zeolith Y, ZSM-5 und Mischungen davon enthält.

5. Katalytisch aktives Partikelfilter nach einem der Ansprüche 3 oder 4,
**dadurch gekennzeichnet,**
**dass** die oxidationskatalytisch aktive Beschichtung ein oder mehrere Cer-Zirkon-Mischoxide und/oder Selten-Erd-dotierten Cer-Zirkon-Mischoxide enthält.

6. Verwendung eines katalytisch aktiven Partikelfilters nach einem der Ansprüche 1 bis 5 zur Entfernung von Partikeln und Schwefelwasserstoff aus dem Abgas von überwiegend mager betriebenen Verbrennungsmotoren.

7. Verfahren zur Entfernung von Stickoxiden und Partikeln aus dem Abgas von überwiegend mager betriebenen Verbrennungsmotoren, wobei das zu reinigende Abgas zunächst über einen anströmseitig angeordneten Stickoxid-Speicherkatalysator und anschließend über ein katalytisch aktives Partikelfilter nach einem der Ansprüche 1 bis 5 geleitet wird, welches abströmseitig zum Stickoxid-Speicherkatalysator angeordnet ist.

## Claims

1. A catalytically active particle filter comprising a filter body, a copper compound and an oxidation-active catalytic coating which contains at least one catalytically active platinum-group metal, wherein the copper compound is present in a second coating applied to the filter body, wherein the oxidation-catalytically active coating forms a zone which covers 10 to 90 % of the full length of the filter body while the coating containing the copper compound forms a second zone which adjoins it and covers the remaining length of the filter body, and wherein the filter body is a porous wall-flow filter substrate comprising cordierite, silicon carbide or aluminium titanate and both coatings are predominantly present in the porous walls between the inflow and outflow ducts,
**characterized in that**
the copper compound used is copper oxide or a high-surface-area, high-melting-point carrier oxide impregnated with a precursor compound which decomposes to copper oxide or mixtures thereof or mixtures of copper oxide with untreated high-surface-area, high-melting-point carrier oxide.

2. The catalytically active particle filter as claimed in claim 1,
**characterized in that**
the carrier oxide is selected from the group consisting of aluminium oxide, rare-earth-doped aluminium oxide, cerium oxide, cerium-zirconium mixed oxide, rare-earth-doped cerium-zirconium mixed oxide or mixtures thereof.

3. The catalytically active particle filter as claimed in claim 1 or 2,
**characterized in that**
the oxidation-catalytically active coating contains platinum or palladium, or platinum and palladium, as well as active aluminium oxide.

4. The catalytically active particle filter as claimed in claim 3,
**characterized in that**
the oxidation-catalytically active coating furthermore contains one or more zeolite compounds selected from the group consisting of zeolite β (zeolite beta), zeolite Y, ZSM-5, and mixtures thereof.

5. The catalytically active particle filter as claimed in one of claims 3 or 4,
**characterized in that**
the oxidation-catalytically active coating contains one or more cerium-zirconium mixed oxides and/or rare-earth-doped cerium-zirconium mixed oxides.

6. Use of a catalytically active particle filter as claimed in one of claims 1 to 5 for removing particles and hydrogen sulphide from the exhaust gas of predominantly lean-running combustion engines.

7. A method for removing nitrogen oxides and particles from the exhaust gas of predominantly lean-running combustion engines; wherein the exhaust gas to be cleaned is first routed via a nitrogen-oxide adsorption catalyst arranged on the inflow side and then via a catalytically active particle filter as claimed in one of claims 1 to 5 which is arranged on the outflow side with respect to the nitrogen-oxide catalyst.

## Revendications

1. Filtre à particules catalytiquement actif comprenant un corps de filtre, un composé de cuivre et un revêtement catalytique actif en oxydation qui contient au moins un métal du groupe du platine catalytiquement actif, le composé de cuivre étant présent dans un deuxième revêtement appliqué sur le corps de filtre, le revêtement catalytiquement actif par oxydation formant une zone qui recouvre 10 à 90 % de la longueur totale du corps de filtre, tandis que le revêtement contenant le composé de cuivre forme une seconde zone qui s'y raccorde et recouvre le reste de la longueur du corps de filtre et le corps de filtre étant un substrat poreux de filtre à écoulement sur paroi en cordiérite, carbure de silicium ou titanate d'aluminium et les deux revêtements étant principalement présents dans les parois poreuses entre les canaux de flux entrant et de flux sortant,
**caractérisé en ce que**
on utilise comme composé de cuivre de l'oxyde de cuivre ou un oxyde support à surface élevée, à haut point de fusion, imprégné d'un composé précurseur dégradable en oxyde de cuivre ou des mélanges de ceux-ci ou des mélanges d'oxyde de cuivre avec de l'oxyde support à surface élevée, à haut point de fusion, non traité.

2. Filtre à particules catalytiquement actif selon la revendication 1,
**caractérisé en ce que**
l'oxyde support est choisi dans le groupe constitué par l'oxyde d'aluminium, l'oxyde d'aluminium dopé aux terres rares, l'oxyde de cérium, l'oxyde mixte de cérium-zirconium, l'oxyde mixte de cérium-zirconium dopé aux terres rares ou de mélanges de ceux-ci.

3. Filtre à particules catalytiquement actif selon la revendication 1 ou 2,
**caractérisé en ce que**
le revêtement catalytiquement actif en oxydation contient du platine ou du palladium ou du platine et du palladium, ainsi que de l'oxyde d'aluminium actif.

4. Filtre à particules catalytiquement actif selon la revendication 3,
**caractérisé en ce que**
le revêtement catalytiquement actif en oxydation contient en outre un ou plusieurs composés zéolithiques choisis dans le groupe constitué par la zéolithe β (zéolithe bêta), la zéolithe Y, la ZSM-5 et des mélanges de celles-ci.

5. Filtre à particules catalytiquement actif selon l'une des revendications 3 ou 4,
**caractérisé en ce que**
le revêtement catalytiquement actif en oxydation contient un ou plusieurs oxydes mixtes de cérium-zirconium et/ou oxydes mixtes de cérium-zirconium dopés aux terres rares,

6. Utilisation d'un filtre à particules catalytiquement actif selon l'une des revendications 1 à 5 pour l'élimination de particules et d'hydrogène sulfuré du gaz d'échappement des moteurs à combustion interne fonctionnant essentiellement avec un mélange pauvre.

7. Procédé d'élimination d'oxydes d'azote et de particules du gaz d'échappement de moteurs à combustion interne fonctionnant essentiellement avec un mélange pauvre ; le gaz d'échappement à purifier étant d'abord conduit sur un catalyseur-accumulateur d'oxydes d'azote disposé du côté du flux entrant et ensuite sur un filtre à particules catalytiquement actif selon l'une des revendications 1 à 5, qui est disposé du côté du flux sortant par rapport au catalyseur-accumulateur d'oxydes d'azote.
